# EUROPÄISCHE PATENTSCHRIFT

(11) **EP 4 249 855 B1**
(45) Veröffentlichungstag und Bekanntmachung des Hinweises auf die Patenterteilung: **11.02.2026**
(21) Anmeldenummer: 23161953.7
(22) Anmeldetag: 15.03.2023
(51) Int. Cl.: G01D 5/244, G01P 1/00, G01P 3/481

(54) **DREHGEBER UND VERFAHREN ZUM BETRIEB EINES DREHGEBERS**
ROTARY ENCODER AND METHOD FOR OPERATING A ROTARY ENCODER
CAPTEUR DE ROTATION ET PROCÉDÉ DE FONCTIONNEMENT D'UN CAPTEUR DE ROTATION

(30) Priorität: 22.03.2022 DE 102022106688
(43) Veröffentlichungstag der Anmeldung: 27.09.2023
(73) Patentinhaber: Johannes Hübner Fabrik Elektrischer Maschinen GmbH, 35394 Gießen (DE)
(72) Erfinder: BLANK, Thomas, 51580 Reichshof (DE); MAIBERGER, Simon, 63599 Biebergemünd (DE)
(74) Vertreter: advotec.

(56) Entgegenhaltungen:
- DE-A1- 10 006 223
- DE-A1- 102007 036 271
- DE-B3- 10 361 886
- DE-B3- 102012 019 572
- DE-B3- 102018 115 362
- DE-U1- 202013 102 753

## Beschreibung

Die Erfindung betrifft einen Drehgeber für eine Maschine, insbesondere Hebezeug, Kran oder dergleichen, sowie ein Verfahren zum Betrieb eines Drehgebers, wobei der Drehgeber mit einer Welle einer Maschine zur Erfassung einer Rotation der Welle verbindbar ist, wobei der Drehgeber ein an einer Maschine befestigbares Gestell mit einer daran angeordneten Gebereinrichtung, zur Erfassung einer Rotation der Drehgeberwelle, und einer Signalausgabeeinrichtung, zur Ausgabe eines Drehgebersignals und/oder eines Drehzahlsignals, aufweist, wobei der Drehgeber eine Lagervorrichtung aufweist, mit der die Drehgeberwelle an dem Gestell drehbar gelagert ist.

Derartige Drehgeber und Verfahren sind aus dem Stand der Technik hinreichend bekannt und werden im Wesentlichen zur Positions- und Drehzahlerfassung einer Achse oder Welle verwendet. Ein Drehgeber umfasst zumindest eine an eine Maschine koppelbare Drehgeberwelle und eine mechanische, optische, kapazitive, induktive oder magnetische Gebereinrichtung bzw. Erfassungseinrichtung. Die Gebereinrichtung kann beispielsweise einen Imkrementalgeber oder einen Absolutgeber ausbilden. In einer mechanischen Ausführung kann die Gebereinrichtung ein Schalter oder ein Zählwerk sein. Die Gebereinrichtung kann für eine Umdrehung der Welle Signale, wie beispielsweise ein Drehwinkelsignal oder ein Drehzahlsignal, gewinnen. Aus diesen Signalen ist dann mittels einer Signalausgabeeinrichtung ein entsprechendes Signal, welches beispielsweise durch die Signalausgabeeinrichtung umgewandelt oder an einen technischen Standard angepasst sein kann, ausgebbar. Die Signalausgabeeinrichtung ist regelmäßig über eine Leitung zur Signalübertragung oder auch drahtlos mit einer Auswertevorrichtung, einer Maschinensteuerung oder dergleichen verbunden. Ein derartiger Drehgeber ist aus der DE 10 2013 204 399 A1 bekannt. Weitere Drehgeber sind aus DE 10 2007 036271 A1 und DE 20 2013 102753 U1 bekannt.

Drehgeber werden u. a. in großen Maschinen oder Anlagen verwendet und sind im Betrieb großen Belastungen ausgesetzt. Ein Gehäuse eines Drehgebers ist daher regelmäßig aus Metall ausgebildet, sodass der Drehgeber vergleichsweise widerstandsfähig gegenüber mechanischen und thermischen Einwirkungen ist. Eine Befestigung des Drehgebers erfolgt dann dadurch, dass das Gehäuse, beispielsweise mittels Schrauben, mit der Maschine verbunden wird. Durch die Verbindung mit der Maschine besteht das Problem, dass Ausgleichs- oder Wellenströme über den mit der Welle verbundenen Drehgeber fließen und so Lagerschäden, insbesondere bei Wälzlagern auftreten können. Zur Vermeidung derartiger Lagerschäden ist es bekannt, sogenannte Erdungskontakte an eine Welle anzuschließen, um über den Erdungskontakt eine Erdung der Welle bzw. einen kontrollierten Abfluss induzierter Ströme, im Wesentlichen über den Erdungskontakt anstelle der Lager, zu gewährleisten. Da es sich bei dem Erdungskontakt um eine weitere Baugruppe handelt, ist dessen Verwendung nicht immer möglich und verursacht unerwünschte Kosten. Zudem entstehen durch hohe Wellenströme unerwünschte Verlustleistungen und höhere Betriebstemperaturen. Weiter ist es bekannt die Welle der Maschine über eine Kupplung von der Drehgeberwelle elektrisch zu isolieren. Derartige isolierende Kupplungen, entsprechende isolierende Adapterwellen oder Isolierbuchsen müssen jedoch präzise gefertigt und montiert werden, um eventuelle Rundlauffehler zu minieren. Mitunter beanspruchen derartige Lösungen mehr Bauraum mit entsprechenden Restriktionen in der Auslegung von Anbauschnittstellen. Weiter kann es durch die dadurch bewirkten Kräfte zu einem erhöhten Lagerverschleiß kommen. Isolierende Kupplungen können aber auch, je nach Bauart, nur gering belastet werden.

Bei derartigen Verbindungen können darüber hinaus Verschmutzungen und Feuchte einen Widerstand der isolierenden Verbindungen und damit eine Schutzfunktion gegen Wellenströme vermindern. Darüber hinaus sind isolierende Lager bekannt, die jedoch nicht für alle standardisierten Lagergrößen und Ausführungen erhältlich sind. Die bei diesen sogenannten Hybridlagern verwendeten unterschiedlichen Materialien, beispielsweise Stahl und Keramik, weisen unterschiedliche Wärmeausdehnungskoeffizienten auf, die einen Arbeitstemperaturbereich einschränken. Bei Hybridlagern können die Kugeln aus Keramik bestehen oder ist eine Isolation einer äußeren Lagerschale durch eine Keramikschicht gebildet. Der vorliegenden Erfindung liegt daher die Aufgabe zugrunde, einen Drehgeber, eine Drehgeberanordnung und ein Verfahren zum Betrieb eines Drehgebers vorzuschlagen, der bzw. das Lagerschäden mit einfachen Mitteln verhindert.

Diese Aufgabe wird durch einen Drehgeber mit den Merkmalen des Anspruchs 1, eine Drehgeberanordnung mit den Merkmalen des Anspruchs 8 und ein Verfahren mit den Merkmalen des Anspruchs 9 gelöst.

Der erfindungsgemäße Drehgeber für eine Maschine, insbesondere Hebezeug, Kran oder dergleichen, weist eine Drehgeberwelle auf, die mit einer Welle einer Maschine zur Erfassung einer Rotation der Welle verbindbar ist, wobei der Drehgeber ein an einer Maschine befestigbares Gestell mit einer daran angeordneten Gebereinrichtung, zur Erfassung einer Rotation der Drehgeberwelle, und eine Signalausgabeeinrichtung, zur Ausgabe eines Drehwinkelsignals und/oder eines Drehzahlsignals, aufweist, wobei der Drehgeber eine Lagervorrichtung aufweist, mit der die Drehgeberwelle an dem Gestell drehbar gelagert ist, wobei der Drehgeber eine Isoliervorrichtung aufweist, die die Drehgeberwelle und die Lagervorrichtung gegenüber dem Gestell elektrisch isoliert. Demnach ist die Drehgeberwelle mit der Welle der Maschine, welche beispielsweise ein elektrischer Motor sein kann, drehbar verbunden. Unter einer Welle wird hier im Sinne der Erfindung auch eine Achse verstanden. Die Welle kann dabei unmittelbar mit einer Antriebseinheit der Maschine gekoppelt sein. Prinzipiell kann aber auch die Drehgeberwelle mit einer Achse drehbar verbunden sein. Das Gestell dient zur Befestigung der Gebereinrichtung an der Maschine, wobei die Gebereinrichtung so an der Drehgeberwelle angeordnet ist, dass bei einer Drehung der Drehgeberwelle ein Drehwinkelsignal und/oder ein Drehzahlsignal generiert werden kann, welches von der Signalausgabeeinrichtung ausgegeben und auch verarbeitet werden kann. Die Gebereinrichtung und die Signalausgabeeinrichtung können dabei wie die aus dem Stand der Technik bekannten Gebereinrichtungen und Signalausgabeeinrichtungen ausgebildet sein. Weiter ist die Drehgeberwelle mittels der Lagervorrichtung an dem Gestell drehbar gelagert. Dadurch dass der Drehgeber eine Isoliervorrichtung aufweist, die die Drehgeberwelle und die Lagervorrichtung gegenüber dem Gestell elektrisch isoliert, kann verhindert werden, dass über die Lagervorrichtung Ausgleichs- oder Wellenströme von der Welle und/oder der Drehgeberwelle in das Gestell bzw. Bauteile der Maschine abfließen. Es ist dann nicht mehr erforderlich, eine isolierte Adapterwelle zwischen der Drehgeberwelle und Welle, spezielle Lager, Kupplungen oder Erdungskontakte vorzusehen. Zwar besteht die Möglichkeit, dass ein elektrisches Potenzial zwischen dem Gestell und der Drehgeberwelle bzw. der Lagervorrichtung entsteht, dieses kann jedoch aufgrund der Isoliervorrichtung nicht ohne weiteres über die Lagervorrichtung ausgeglichen werden bzw. als ein Strom abfließen. Alleine durch die Isoliervorrichtung wird es dadurch möglich ohne weitere aufwändige technische Maßnahmen Lagerschäden, beispielsweise an dem Drehgeber oder einer Maschine, einfach zu vermeiden. Weiter eröffnet die Isoliervorrichtung die Möglichkeit ein elektrisches Signal und/oder ein elektrisches Potenzial zwischen der Drehgeberwelle und dem Gestell, zwischen der Welle einer Maschine und dem Gestell, zwischen der Lagervorrichtung und dem Gestell und/oder zwischen der Lagervorrichtung und der Drehgeberwelle, einzuspeisen und/oder zu erfassen. Mit Hilfe einer Messeinrichtung kann dann eine Veränderung des elektrischen Signals und/oder des elektrischen Potenzials gemessen und eine physikalische Größe, beispielsweise ein Schädigungswert von einem Lager der Drehgeberwelle, der Welle einer Maschine und/oder der Lagervorrichtung bestimmt werden. Insbesondere können eine physikalische Größe bzw. ein Schädigungswert des Drehgebers und/oder eines Geberanbaus - einschließlich einer Kupplung, einer Adapterwelle oder einer Drehmomentstütze - sowie beispielsweise auch ein Schädigungswert eines Maschinenlagers bestimmt werden. Durch die Isolation der Lagervorrichtung können somit alle Verfahren für eine elektrische Zustandsüberwachung eines gesamten Antriebsstrangs in dem Drehgeber integriert und auf eine einzige Anbaustelle reduziert werden.

Die Isoliervorrichtung kann folglich derart ausgebildet sein, dass eine Ableitung von in der Welle und/oder der Drehgeberwelle induzierten oder eingespeisten Strömen oder Spannungen in das Gestell unterbrochen ist. Da das Gestell bei einer Montage an der Maschine in der Regel über die Maschine geerdet ist, kann so durch die Isoliervorrichtung verhindert werden, dass Ströme in das Gestell über die Lagervorrichtung oder die Drehgeberwelle abfließen. Somit kann eine Zustandsüberwachung der Lagervorrichtung des Drehgebers und/oder eine Zustandsüberwachung des restlichen Antriebsstrangs bis hin zu Lagern der Maschine realisiert als auch von einander separiert werden. Sofern beispielsweise eine isolierte Kupplung oder dergleichen zwischen der Drehgeberwelle und der Welle der Maschine eingesetzt ist, kann eine Kontaktierung der Welle der Maschine mittels einer weiteren geeigneten Vorrichtung erfolgen.

Das Gestell kann als ein Gehäuse ausgebildet sein, in dem die Gebereinrichtung, die Signalausgabeeinrichtung und die Lagervorrichtung aufgenommen sein können. Das Gehäuse kann als ein in sich geschlossenes Gehäuse und/oder mehrteilig ausgebildet sein. Das Gehäuse kann beispielsweise so beschaffen sein, dass es mit einem Flansch zur Befestigung an einer Maschine ausgebildet ist. Innerhalb des Gehäuses kann eine Aufnahme für die Lagervorrichtung ausgebildet sein. Die Gebereinrichtung kann durch eine die Drehgeberwelle umgebende Scheibe mit Inkrementen, und einen Sensor zur Detektion der Inkremente ausgebildet sein, sodass das Drehwinkelsignal und/oder das Drehzahlsignal gewonnen werden kann. Die Signalausgabeeinrichtung kann durch eine diskrete Schaltung zur Verarbeitung der jeweiligen Signale und deren Weiterleitung ausgebildet sein. Die Gebereinrichtung und auch die Signalausgabeeinrichtung können an dem Gehäuse befestigt sein.

Die Lagervorrichtung weist so mindestens ein Lager, bevorzugt ein Wälzlager, besonders bevorzugt zwei oder mehr Wälzlager, auf.

Wesentlich dabei ist, dass es sich dann bei dem Wälzlager um ein standardisiertes bzw. genormtes und auch unisoliertes Wälzlager handelt, welches kostengünstig und einfach erhältlich ist. Beispielsweise kann das Wälzlager ein Rillenkugellager sein. Alternativ kann die Lagervorrichtung mindestens ein Gleitlager, bevorzugt zwei oder mehr Gleitlager aufweisen.

Das Lager bzw. Wälzlager kann unmittelbar mit der Drehgeberwelle verbunden sein. Zwischen einem Außendurchmesser der Drehgeberwelle und einem Innendurchmesser des Lagers bzw. Wälzlagers kann eine Passung, beispielsweise eine Übergangspassung oder Presspassung, ausgebildet sein. Das Lager bzw. Wälzlager kann damit direkt an der Drehgeberwelle anliegen.

Die Lagervorrichtung umfasst eine Lagereinrichtung, die das Lager bzw. Wälzlager oder eine Mehrzahl von Lager bzw. Wälzlager haltert und zumindest teilweise umgibt. Die Lagereinrichtung ist als eine Hülse augebildet, in die das bzw. die Lager bzw. Wälzlager eingesetzt sind. Dabei kann ein Außendurchmesser des Lagers bzw. Wälzlagers mit einem Innendurchmesser der Hülse durch eine Passung, beispielswiese eine Übergangspassung oder Presspassung, oder eine Klebeverbindung unmittelbar verbunden sein. Eine Montage der Lager bzw. Wälzlager unabhängig von dem Gestell kann so wesentlich vereinfacht werden. Die Lagereinrichtung bzw. die Hülse kann ihrerseits einen Flansch ausbilden, über den die Lagereinrichtung an dem Gestell bzw. Gestell befestigt werden kann. Durch die Isoliervorrichtung ist es dann möglich, die Lagereinrichtung von dem Gehäuse elektrisch zu isolieren und dennoch eine sichere und einfache Montage der Lager bzw. Wälzlager zu gewährleisten. Gleichzeitig ist es auch möglich, kostengünstige Wälzlager zu verwenden, da keine besonderen Ausführungsformen von Wälzlagern erforderlich sind. Die Lagereinrichtung kann einen modularen Aufbau von Drehgebern ermöglichen, derart, dass die Lagereinrichtung an verschiedenen Arten von Drehgebern Verwendung finden kann. Weiter erleichtert die Lagereinrichtung einen elektrischen Anschluss an eine Leitung zur Einspeisung eines Signals oder Messung eines Potentials über die Lager bzw. Wälzlager wesentlich.

Die Isoliervorrichtung kann durch dielektrisches Material ausgebildet sein, welches zwischenliegend dem Gestell und der Lagervorrichtung angeordnet sein kann. Das dielektrische Material ermöglicht dann eine vergleichsweise dünne Ausbildung der Isoliervorrichtung, sodass durch die Isoliervorrichtung nicht wesentlich mehr Bauraum benötigt wird. Das dielektrische Material kann Kunststoff, Isolierpapier, Glimmer oder Keramik sein. Weiter sind auch andere, bekannte dielektrische Materialien, wie Hartgewebe oder Leiterplattenmaterial, verwendbar. Die Isoliervorrichtung kann auch Luftspalte ausbilden. Das dielektrische Material kann auch eine Oberflächenbeschichtung ausbilden, beispielsweise als ein Lack oder eine Eloxalschicht vorliegen.

Die Isoliervorrichtung kann aus einer Mehrzahl von Isoliereinrichtungen ausgebildet sein, wobei die Lagervorrichtung über die Isoliereinrichtungen mit dem Gestell fest verbunden sein kann. Die Isoliereinrichtungen können dann an den Stellen zwischen der Lagervorrichtung und dem Gestellt angeordnet sein, an denen die Lagervorrichtung an dem Gestell gehaltert ist und sonst mit dem Gestell in Kontakt stehen würde.

Die Isoliervorrichtung kann als zumindest eine Hülse und/oder eine Scheibe ausgebildet sein. Wenn die Lagervorrichtung zumindest abschnittsweise in Form einer Hülse ausgebildet ist, kann die Isoliervorrichtung dann die Lagervorrichtung umgeben. Sofern die Lagervorrichtung mit einer axialen Fläche an dem Gestell anliegt, kann die Isoliervorrichtung auch abschnittsweise als eine Scheibe ausgebildet sein, die an der axialen Fläche anliegt. Sofern die Isoliervorrichtung eine Mehrzahl von Isoliereinrichtungen umfasst können diese Isoliereinrichtungen als Ringe oder auch als einzelne Scheiben, beispielsweise Unterlegscheiben für Schrauben oder dergleichen, ausgebildet sein. Dies ist dann besonders vorteilhaft, wenn die Lagervorrichtung bzw. eine Lagereinrichtung mit dem Gestell verschraubt ist.

Alternativ kann die Isoliervorrichtung durch ein dielektrisches Material ausgebildet sein, wobei die Lagereinrichtung die Isoliervorrichtung ausbildet. Demnach kann dann die Lagereinrichtung alleine aus dem dielektrischen Material, wie Kunststoff oder dergleichen, ausgebildet sein. Die gesonderte Ausbildung von einer Isoliervorrichtung bzw. von Isoliereinrichtungen ist dann nicht mehr erforderlich. Diese Ausführungsform ist besonders vorteilhaft, wenn über die Lagereinrichtung keine großen Kräfte übertragen werden.

Die erfindungsgemäße Drehgeberanordnung umfasst einen erfindungsgemäßen Drehgeber und eine Maschine, insbesondere Hebezeug, Kran oder dergleichen, wobei der Drehgeber mit einer Welle der Maschine zur Erfassung einer Rotation der Welle verbunden ist. Dabei kann die Welle der Maschine unmittelbar mit einer Drehgeberwelle des Drehgebers verbunden sein, ohne dass Adapterwellen oder andere Mittel zur gegenseitigen elektrischen Isolierung der Wellen vorgesehen sein müssten.

Bei dem erfindungsgemäßen Verfahren zum Betrieb eines Drehgebers für eine Maschine, insbesondere Hebezeug, Kran oder dergleichen, erfasst eine mit einer Welle einer Maschine verbundene Drehgeberwelle des Drehgebers eine Rotation der Welle, wobei eine Gebereinrichtung des Drehgebers an einem an der Maschine befestigen Gestell des Drehgebers angeordnet ist und eine Rotation der Drehgeberwelle erfasst, wobei mittels einer Signalausgabeeinrichtung des Drehgebers ein Drehgebersignal und/oder ein Drehzahlsignal ausgegeben wird, wobei die Drehgeberwelle an dem Gestell mit einer Lagervorrichtung des Drehgebers drehbar gelagert wird, wobei die Drehgeberwelle und die Lagervorrichtung mittels einer Isoliervorrichtung des Drehgebers gegenüber dem Gestell elektrisch isoliert wird. Zu den Vorteilen des erfindungsgemäßen Verfahrens wird auf die Vorteilsbeschreibung des erfindungsgemäßen Drehgebers verwiesen.

Weiter kann mittels einer Messeinrichtung des Drehgebers zumindest ein elektrisches Signal und/oder ein elektrisches Potenzial zwischen der Drehgeberwelle und dem Gestell, zwischen der Lagervorrichtung und dem Gestell, zwischen der Welle einer Maschine und dem Gestell, und/oder zwischen der Lagervorrichtung und der Drehgeberwelle, eingespeist und/oder erfasst werden. Die Messeinrichtung des Drehgebers kann beispielsweise in einem von dem Gestell ausgebildeten Gehäuse des Drehgebers integriert sein. Da mittels der Isoliervorrichtung die Drehgeberwelle und die Welle der Maschine von dem Gestell elektrisch isoliert sind kann sich ein elektrisches Potenzial zwischen der Drehgeberwelle bzw. der Welle der Maschine und dem Gestell ausbilden. Mit der Messeinrichtung kann nun eine Größe dieses elektrischen Potenzials detektiert bzw. gemessen werden. Auch kann die Messeinrichtung ein elektrisches Signal, beispielsweise ein Signal mit einer festen oder variablen Frequenz oder einem beliebigen Signalmuster auf diese Weise einspeisen und/oder erfassen. Unter einem eingespeisten Signal wird hier ein Potential verstanden, welches eigens mittels der Messeinrichtung erzeugt wurde. Ein eingespeistes Signal kann gegenüber einer Erdung einer Maschine galvanisch getrennt sein. Dies vermeidet eine Interferenz von Signalen mit induzierten bzw. eingekoppelten Wellenspannungen und kann somit eine Genauigkeit und Empfindlichkeit der Messeinrichtung erhöhen. Wenn die Erfassung für ein zwischen der Lagervorrichtung und dem Gestell geleitetes Signal erfolgt, kann vorteilhaft ein Messwert des Signals für die Lagervorrichtung gewonnen werden. Weiter kann die Erfassung für ein zwischen der Welle der Maschine und dem Gestell geleitetes Signal erfolgen, wobei vorteilhaft ein Messwert des Signals für die Lager der Welle bzw. den Antriebsstrang gewonnen werden kann. Durch die Verwendung jeweils unterschiedlicher Signale wird eine zeitparallele Messung möglich. Die Messeinrichtung kann dann mit der Signalausgabeeinrichtung verbunden sein und über die Signalausgabeeinrichtung einen entsprechenden Messwert ausgeben. Dieser Messwert kann ausgewertet werden, sodass der Drehgeber selbst als ein Messgerät für das elektrische Potenzial und/oder Signal genutzt werden kann. Das elektrische Potenzial und/oder Signal kann dazu genutzt werden, einen Betriebszustand der Maschine und/oder des Drehgebers zu bestimmen.

Mittels der Messeinrichtung kann ein elektrisches Signal erzeugt und über zumindest ein Lager, bevorzugt zumindest ein Wälzlager, der Lagervorrichtung und/oder einem Lager der Welle der Maschine, geleitet und gemessen werden. So wird es möglich einen Betriebszustand des jeweiligen Lagers mit einfachen Mitteln zu überwachen. Eine Signalstärke kann dabei so bemessen sein, dass das Lager durch das Signal nicht geschädigt wird. Durch die Isolation der Lagervorrichtung gegenüber dem Gestell können jeweils einzelne Lager der Lagervorrichtung oder sämtliche Lager der Lagervorrichtung gleichzeitig überwacht werden. Die Messeinrichtung kann dann direkt mit einzelnen Lagern oder einer Lagereinrichtung der Lagervorrichtung elektrisch verbunden sein. Beispielsweise kann das Signal bei einem Wälzlager über einen Innenring, Wälzkörper und einen Außenring des Wälzlagers geleitet werden.

Die Messeinrichtung kann eine Veränderung des elektrischen Potenzials bzw. Signals über einen Betriebszeitabschnitt erfassen bzw. speichern, wobei die Messeinrichtung eine physikalische Größe, beispielsweise einen lastabhängigen Schädigungswert von einem Lager der Welle der Maschine, von der Lagervorrichtung und/oder von einem Anbau der Maschine, einschließlich aller am Anbau mitwirkenden Teile, wie Kupplung, Adapterwelle oder Drehmomentstütze, bestimmen und ausgeben kann. Je nach eines Zustands der betreffenden Lager und/oder mitwirkender Teile der Maschine kann es zu einer mehr oder weniger großen Veränderung des Signals bzw. Potentials kommen. Wenn die Messeinrichtung das elektrische Signal erzeugt, kann dieses kontinuierlich oder in Intervallen erzeugt werden. Eine Veränderung dieses Signals bzw. dieser Störsignale bzw. des elektrischen Potenzials kann durch eine Messung über einen Betriebszeitabschnitt leicht festgestellt werden. Diese Messung kann dazu verwendet werden, einen Schädigungswert zu bestimmen und damit einen eventuellen Schaden an der Maschine und/oder Lager vorauszubestimmen. Die Messeinrichtung kann folglich auch zu einer Überwachung des Betriebszustandes der Maschine dienen.

Weitere vorteilhafte Ausführungsformen des Verfahrens ergeben sich aus den Merkmalsbeschreibungen der auf den Vorrichtungsanspruch 1 zurückbezogenen Unteransprüche.

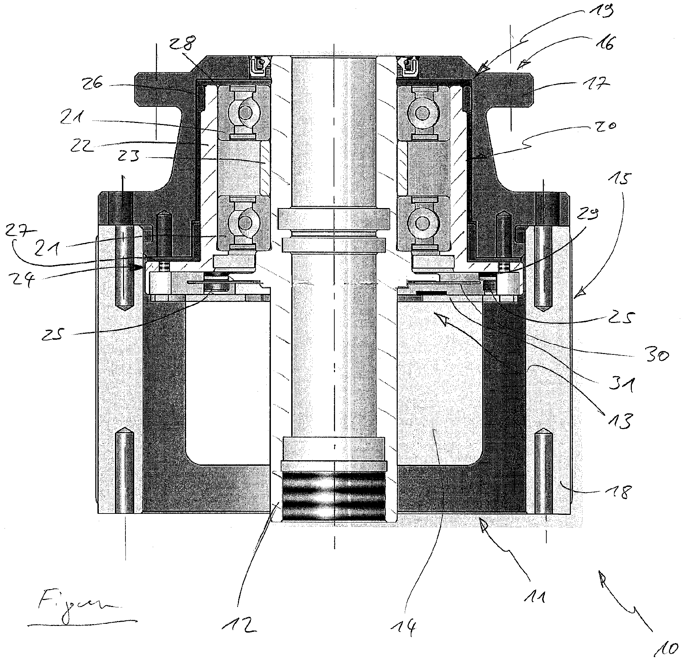

Nachfolgend wird eine bevorzugte Ausführungsform der Erfindung unter Bezugnahme auf die beigefügte Zeichnung näher erläutert.

Die **Figur** zeigte eine Längsschnittansicht eines Drehgebers 10, welcher im Wesentlichen aus einem Gestell 11, einer Drehgeberwelle 12, einer Gebereinrichtung 13 und einer hier nur schematisch dargestellten Signalausgabeeinrichtung 14 gebildet ist. Das Gestell 11 ist als ein Gehäuse 15 ausgebildet, welches über einen Flansch eines ersten Gehäuseteils 17 mit einer nicht dargestellten Maschine verbindbar ist. Ein zweites Gehäuseteil 18 ist mit dem ersten Gehäuseteil 17 verschraubt.

Weiter weist der Drehgeber 10 eine Isoliervorrichtung 19 und eine Lagervorrichtung 20 zur Lagerung der Drehgeberwelle 12 auf. Die Isoliervorrichtung 19 ist so beschaffen, dass die Drehgeberwelle 12 und die Lagervorrichtung 20 gegenüber dem Gestell 11 elektrisch isoliert ist. Die Lagervorrichtung 20 umfasst zwei Wälzlager 21, die unmittelbar mit der Drehgeberwelle 12 verbunden sind. Weiter umfasst die Lagervorrichtung 20 eine Lagereinrichtung 22, die abschnittsweise hülsenförmig ausgebildet ist und die Wälzlager 21 aufnimmt. Die Wälzlager 21 sind dabei unmittelbar mit der Lagereinrichtung 22 verbunden und über einen Ring 23 voneinander beabstandet. Weiter bildet die Lagereinrichtung 22 einen Flansch 24 aus, über den mittels Schrauben 25 die Lagereinrichtung 22 mit dem ersten Gehäuseteil 17 verschraubt ist. Die Isoliervorrichtung 19 ist aus einem dielektrischen Material, wie beispielsweise Kunststoff ausgebildet, und hier aus einem ersten Ring 26, einem zweiten Ring 27, einer Scheibe 28 und einer Mehrzahl von Unterlegscheiben 29 für die Schrauben 25 ausgebildet. Die Lagereinrichtung 22 ist nun so vollständig von dem Gestell 11 elektrisch isoliert. Eine Ableitung von eventuell in einer nicht dargestellten Welle der Maschine und/oder der Drehgeberwelle 12 induzierten Strömen in das Gestell 11 ist demnach unterbrochen. Die Ausbildung der Gebereinrichtung 13, hier ausgebildet durch eine auf der Drehgeberwelle 12 befestigten Scheibe 30 mit nicht ersichtlichen Inkrementen und einem auf einer Platine 31, hier nicht näher gezeigten Detektor zur Erfassung der Inkremente, ist von der Ausbildung der Lagervorrichtung 20 und der Isoliervorrichtung 19 nicht weiter beeinflusst.

## Patentansprüche

1. Drehgeber (10) für eine Maschine, insbesondere Hebezeug, Kran oder dergleichen, wobei der Drehgeber eine Drehgeberwelle (12) aufweist, die mit einer Welle einer Maschine zur Erfassung einer Rotation der Welle verbindbar ist, wobei der Drehgeber ein an einer Maschine befestigbares Gestell (11) mit einer daran angeordneten Gebereinrichtung (13), zur Erfassung einer Rotation der Drehgeberwelle, und einer Signalausgabeeinrichtung (14), zur Ausgabe eines Drehwinkelsignals und/oder eines Drehzahlsignals, aufweist, wobei der Drehgeber eine Lagervorrichtung (20) aufweist, mit der die Drehgeberwelle an dem Gestell drehbar gelagert ist,
wobei der Drehgeber eine Isoliervorrichtung (19) aufweist, die die Drehgeberwelle und die Lagervorrichtung gegenüber dem Gestell elektrisch isoliert, wobei ,
dass die Lagervorrichtung (20) zumindest ein Lager, bevorzugt ein Wälzlager (21), besonders bevorzugt zwei oder mehr Wälzlager, aufweist, und dass die Lagervorrichtung (20) eine Lagereinrichtung (22) umfasst, die das Lager oder eine Mehrzahl von Lager haltert und zumindest teilweise umgibt, wobei die Lagereinrichtung (22) als zumindest eine Hülse ausgebildet ist, wobei die Hülse einen Flansch ausbildet, über den die Lagereinrichtung an dem Gestell befestigbar ist, und wobei die Isoliervorrichtung (19) die Lagervorrichtung (20) umgibt.

2. Drehgeber nach Anspruch 1,
**dadurch gekennzeichnet,**
**dass** die Isoliervorrichtung (19) derart ausgebildet ist, dass eine Ableitung von in der Welle und/oder der Drehgeberwelle (12) induzierten Strömen in das Gestell (11) unterbrochen ist.

3. Drehgeber nach Anspruch 1 oder 2,
**dadurch gekennzeichnet,**
**dass** das Gestell (11) als ein Gehäuse (15) ausgebildet ist, in dem die Gebereinrichtung (13), die Signalausgabeeinrichtung (14) und die Lagervorrichtung (20) aufgenommen sind.

4. Drehgeber nach einem der vorangehenden Ansprüche,
**dadurch gekennzeichnet,**
**dass** das Lager unmittelbar mit der Drehgeberwelle (12) verbunden ist.

5. Drehgeber nach einem der vorangehenden Ansprüche,
**dadurch gekennzeichnet,**
**dass** die Isoliervorrichtung (19) durch ein dielektrisches Material ausgebildet ist, welches zwischenliegend dem Gestell (11) und der Lagervorrichtung (20) angeordnet ist.

6. Drehgeber nach Anspruch 5,
**dadurch gekennzeichnet,**
**dass** das dielektrische Material Kunststoff, Isolierpapier, Glimmer oder Keramik ist.

7. Drehgeber nach einem der vorangehenden Ansprüche,
**dadurch gekennzeichnet,**
**dass** die Isoliervorrichtung (19) aus einer Mehrzahl von Isoliereinrichtungen (26, 27, 28, 29) ausgebildet ist, wobei die Lagervorrichtung (20) über die Isoliereinrichtungen mit dem Gestell (11) fest verbunden ist.

8. Drehgeberanordnung mit einem Drehgeber (10) nach einem der vorangehenden Ansprüche und einer Maschine, insbesondere Hebezeug, Kran oder dergleichen, wobei der Drehgeber mit einer Welle der Maschine zur Erfassung einer Rotation der Welle verbunden ist.

9. Verfahren zum Betrieb eines Drehgebers (10) für eine Maschine, insbesondere Hebezeug, Kran oder dergleichen, wobei eine mit einer Welle einer Maschine verbundene Drehgeberwelle (12) des Drehgebers eine Rotation der Welle erfasst, wobei eine Gebereinrichtung (13) des Drehgebers an einem an der Maschine befestigten Gestell (11) des Drehgebers angeordnet ist und eine Rotation der Drehgeberwelle erfasst, wobei mittels einer Signalausgabeeinrichtung (14) des Drehgebers ein Drehwinkelsignal und/oder ein Drehzahlsignal ausgegeben wird, wobei die Drehgeberwelle an dem Gestell mit einer Lagervorrichtung (20) des Drehgebers drehbar gelagert wird, wobei die Drehgeberwelle und die Lagervorrichtung mittels einer Isoliervorrichtung (19) des Drehgebers gegenüber dem Gestell elektrisch isoliert wird, wobei ,
dass die Lagervorrichtung (20) zumindest ein Lager, bevorzugt ein Wälzlager (21), besonders bevorzugt zwei oder mehr Wälzlager, aufweist, und dass die Lagervorrichtung (20) eine Lagereinrichtung (22) umfasst, die das Lager oder eine Mehrzahl von Lager haltert und zumindest teilweise umgibt, wobei die Lagereinrichtung(22) als zumindest eine Hülse ausgebildet ist, wobei die Hülse einen Flansch ausbildet, über den die Lagereinrichtung an dem Gestell befestigbar ist, und wobei die Isoliervorrichtung (19) die Lagervorrichtung (20) umgibt.

10. Verfahren nach Anspruch 9,
**dadurch gekennzeichnet,**
**dass** mittels einer Messeinrichtung des Drehgebers (10) zumindest ein elektrisches Signal und/oder ein elektrisches Potential zwischen der Drehgeberwelle (12) und dem Gestell (11), zwischen der Lagervorrichtung (20) und dem Gestell, zwischen der Welle einer Maschine und dem Gestell, und/oder zwischen der Lagervorrichtung und der Drehgeberwelle, erfasst wird.

11. Verfahren nach Anspruch 10,
**dadurch gekennzeichnet,**
**dass** mittels der Messeinrichtung ein elektrisches Signal erzeugt und über zumindest ein Lager, bevorzugt zumindest ein Wälzlager (21), der Lagervorrichtung (20) und/oder einem Lager der Welle der Maschine, geleitet und gemessen wird.

12. Verfahren nach Anspruch 10 oder 11,
**dadurch gekennzeichnet,**
**dass** die Messeinrichtung eine Veränderung des elektrischen Signals über einen Betriebszeitabschnitt erfasst, wobei die Messeinrichtung eine physikalische Größe, bevorzugt einen lastabhängigen Schädigungswert, von einem Lager der Welle der Maschine, von der Lagervorrichtung (20) und/oder von einem Anbau der Maschine, bestimmt und ausgibt.

## Claims

1. A rotary encoder (10) for a machine, in particular a hoist, crane or the like, the rotary encoder having a rotary encoder shaft (12) which is connectable to a shaft of a machine for detecting a rotation of the shaft, the rotary encoder having a frame (11) which is mountable on a machine, the frame (11) having an encoder element (13) disposed thereon for detecting a rotation of the rotary encoder shaft and a signal output element (14) for outputting a rotation angle signal and/or a speed signal, the rotary encoder having a bearing device (20) by means of which the rotary encoder shaft is rotatably mounted on the frame,
the rotary encoder having an insulating device (19) which electrically insulates the rotary encoder shaft and the bearing device from the frame,
the bearing device (20) having at least one bearing, preferably a rolling bearing (21), particularly preferably two or more rolling bearings, and the bearing device (20) comprising a support element (22) which supports and at least partially surrounds the bearing or a plurality of bearings, the support element (22) being at least formed as a sleeve, the sleeve forming a flange by means of which the support element is fastened on the frame, and the insulating device (19) surrounding the bearing device (20).

2. The rotary encoder according to claim 1,
**characterized in that**
the insulating device (19) can be formed such that currents induced in the shaft and/or the rotary encoder shaft (12) are interrupted from being discharged to the frame (11).

3. The rotary encoder according to claim 1 or 2,
**characterized in that**
the frame (11) is formed as a housing (15) in which the encoder element (13), the signal output element (14) and the bearing device (20) are accommodated.

4. The rotary encoder according to any one of the preceding claims, **characterized in that**
the bearing is directly connected to the rotary encoder shaft (12).

5. The rotary encoder according to any one of the preceding claims, **characterized in that**
the insulating device (19) is formed by a dielectric material which is disposed between the frame (11) and the bearing device (20).

6. The rotary encoder according to claim 5,
**characterized in that**
the dielectric material is plastic, insulating paper, mica or ceramic.

7. The rotary encoder according to any one of the preceding claims, **characterized in that**
the insulating device (19) is formed by a plurality of insulating elements (26, 27, 28, 29), the bearing device (20) being rigidly connected to the frame (11) via the insulating elements.

8. A rotary encoder arrangement having a rotary encoder (10) according to any one of the preceding claims and a machine, in particular a hoist, crane or the like, the rotary encoder being connected to a shaft of the machine for detecting a rotation of the shaft.

9. A method for operating a rotary encoder (10) for a machine, in particular a hoist, crane or the like, a rotary encoder shaft (12) of the rotary encoder detecting a rotation of the shaft, said rotary encoder shaft (12) being connected to a shaft of a machine, an encoder element (13) of the rotary encoder being disposed on a frame (11) of the rotary encoder and detecting a rotation of the rotary encoder shaft, said frame (11) being fastened to the machine, a rotation angle signal and/or a speed signal being output by means of a signal output element (14) of the rotary encoder, the rotary encoder shaft being rotatably mounted on the frame via a bearing device (20) of the rotary encoder,
the rotary encoder shaft and the bearing device being electrically insulated from the frame by means of an insulating device (19) of the rotary encoder,
the bearing device (20) having at least one bearing, preferably a rolling bearing (21), particularly preferably two or more rolling bearings, and the bearing device (20) comprising a support element (22) which supports and at least partially surrounds the bearing or a plurality of bearings, the support element (22) being at least formed as a sleeve, the sleeve forming a flange by means of which the support element is fastened on the frame, and the insulating device (19) surrounding the bearing device (20).

10. The method according to claim 9,
**characterized in that**
at least an electric signal and/or an electric potential is detected between the rotary encoder shaft (12) and the frame (11), between the bearing device (20) and the frame, between the shaft of a machine and the frame, and/or between the bearing device and the rotary encoder shaft by means of a measuring element of the rotary encoder (10).

11. The method according to claim 10,
**characterized in that**
an electric signal is generated by means of the measuring element and is conducted and measured via at least a bearing, preferably at least a rolling bearing (21), of the bearing device (20) and/or a bearing of the shaft of the machine.

12. The method according to claim 10 or 11,
**characterized in that**
the measuring element detects a change in the electric signal over an operation period, the measuring element determining and outputting a physical quantity, preferably a load-dependent damage value, of a bearing of the shaft of the machine, of the bearing device (20) and/or of an attachment of the machine.

## Revendications

1. Transmetteur de vitesse (10) pour une machine, notamment un appareil de levage, une grue ou similaire, le transmetteur de vitesse ayant un arbre (12) de transmetteur de vitesse qui peut être connecté à un arbre d'une machine pour détecter une rotation de l'arbre, le transmetteur de vitesse ayant un cadre (11) pouvant être monté sur une machine, le cadre (11) ayant un élément de transmetteur (13) disposé sur celui-ci pour détecter une rotation de l'arbre du transmetteur de vitesse, et ayant un élément (14) de sortie de signaux pour émettre un signal de l'angle de rotation et/ou un signal de la vitesse de rotation, le transmetteur de vitesse ayant un dispositif de palier (20) au moyen duquel l'arbre du transmetteur de vitesse est monté de manière rotative sur le cadre,
le transmetteur de vitesse ayant un dispositif isolant (19) qui isole électriquement l'arbre de transmetteur de vitesse et le dispositif de palier du cadre,
le dispositif de palier (20) ayant au moins un palier, de préférence un palier à rouleau (21), de préférence deux ou plusieurs paliers à rouleau, et le dispositif de palier (20) comprenant un élément de support (22) qui supporte et entoure au moins partiellement le palier ou une pluralité de paliers, l'élément de support (22) étant au moins formé comme une douille, la douille formant un flasque au moyen duquel l'élément de support peut être fixé sur le cadre, et le dispositif isolant (19) entourant le dispositif de palier (20).

2. Transmetteur de vitesse selon la revendication 1,
**caractérisé en ce que**
le dispositif isolant (19) est formé de telle sorte que les courants induits dans l'arbre et/ou l'arbre (12) du transmetteur de vitesse ne peuvent pas être déchargés vers le cadre (11).

3. Transmetteur de vitesse selon la revendication 1 ou la revendication 2, **caractérisé en ce que**
le cadre (11) est formé comme un boîtier (15) dans lequel l'élément d' transmetteur (13), l'élément (14) de sortie de signaux et le dispositif de palier (20) sont logés.

4. Transmetteur de vitesse selon l'une quelconque des revendications précédentes,
**caractérisé en ce que**
le palier est directement connecté à l'arbre (12) du transmetteur de vitesse.

5. Transmetteur de vitesse selon l'une quelconque des revendications précédentes,
**caractérisé en ce que**
le dispositif isolant (19) est formé par un matériau diélectrique qui est disposé entre le cadre (11) et le dispositif de palier (20).

6. Transmetteur de vitesse selon la revendication 5,
**caractérisé en ce que**
le matériau diélectrique est du plastique, du papier isolant, du mica ou de la céramique.

7. Transmetteur de vitesse selon l'une quelconque des revendications précédentes,
**caractérisé en ce que**
le dispositif isolant (19) est formé par une pluralité d'éléments isolants (26, 27, 28, 29), le dispositif de palier (20) étant connecté de manière rigide au cadre (11) par l'intermédiaire des éléments isolants.

8. Agencement de transmetteur de vitesse ayant un transmetteur de vitesse (10) selon l'une quelconque des revendications précédentes et une machine, notamment un appareil de levage, une grue ou similaire, le transmetteur de vitesse étant connecté à un arbre de la machine pour détecter une rotation de l'arbre.

9. Procédé pour le fonctionnement d'un transmetteur de vitesse (10) pour une machine, notamment pour un appareil de levage, pour une grue ou similaire, un arbre (12) du transmetteur de vitesse détectant une rotation de l'arbre, ledit arbre (12) de transmetteur de vitesse étant connecté à un arbre d'une machine, un élément de transmetteur (13) étant disposé sur un cadre (11) du transmetteur de vitesse et détectant une rotation de l'arbre du transmetteur de vitesse, ledit cadre (11) étant fixé à la machine, un signal de l'angle de rotation et/ou un signal de la vitesse de rotation étant émis au moyen d'un élément (14) de sortie de signaux du transmetteur de vitesse, l'arbre du transmetteur de vitesse étant monté de manière rotative sur le cadre par l'intermédiaire d'un dispositif de palier (20) du transmetteur de vitesse,
l'arbre de transmetteur de vitesse et le dispositif de palier étant isolés électriquement du cadre au moyen d'un dispositif isolant (19) du transmetteur de vitesse,
le dispositif de palier (20) ayant au moins un palier, de préférence un palier à rouleau (21), de préférence deux ou plusieurs paliers à rouleau, et le dispositif de palier (20) comprenant un élément de support (22) qui supporte et entoure au moins partiellement le palier ou une pluralité de paliers, l'élément de support (22) étant au moins formé comme une douille, la douille formant un flasque au moyen duquel l'élément de support peut être fixé sur le cadre, et le dispositif isolant (19) entourant le dispositif de palier (20).

10. Procédé selon la revendication 9,
**caractérisé en ce**
**qu'**au moins un signal électrique et/ou un potentiel électrique est détecté entre l'arbre (12) du transmetteur de vitesse et le cadre (11), entre le dispositif de palier (20) et le cadre, entre l'arbre d'une machine et le cadre, et/ou entre le dispositif de palier et l'arbre du transmetteur de vitesse au moyen d'un élément de mesure du transmetteur de vitesse (10).

11. Procédé selon la revendication 10,
**caractérisé en ce**
**qu'**un signal électrique est généré au moyen de l'élément de mesure et est conduit et mesuré par l'intermédiaire d'au moins un palier, de préférence au moins un palier à rouleau (21), du dispositif de palier (20) et/ou d'un palier de l'arbre de la machine.

12. Procédé selon la revendication 10 ou la revendication 11,
**caractérisé en ce que**
l'élément de mesure détecte une variation du signal électrique sur une durée de fonctionnement, l'élément de mesure déterminant et émettant une grandeur physique, de préférence une valeur de détérioration dépendant de la charge, d'un palier de l'arbre de la machine, du dispositif de palier (20) et/ou d'un accessoire de la machine.
